# EUROPÄISCHE PATENTANMELDUNG

(11) **EP 1 087 221 A1**
(43) Veröffentlichungstag der Anmeldung: **28.03.2001**
(21) Anmeldenummer: 00115198.4
(22) Anmeldetag: 13.07.2000
(51) Int. Cl.: G01N 21/43, G01N 21/53, B60S 1/08

(54) **Optoelektronische Sensoreinrichtung**

(30) Priorität: 22.09.1999 DE 19946220
(71) Anmelder: JENOPTIK Aktiengesellschaft, 07743 Jena (DE)
(72) Erfinder: Schaller, Uwe, 07768 Kahla (DE); Döge, Volker, 07747 Jena (DE); Krüger, Ullrich, 07751 Milda (DE); Feige, Hans-Jürgen, 07745 Jena (DE)

(57) **Zusammenfassung**

Optoelektronische Sensoreinrichtung zur mittelbaren Erfassung der Verschmutzung einer Oberfläche, insbesondere einer transparenten Scheibe, bestehend aus einem Strahlungsleiter, der das von mindestens zwei Sendern 5 ausgehende Prüflicht durch eine am Strahlungsleiter ausgebildete Testfläche 2 hindurch auf mindestens zwei Empfänger 6 abbildet und die Sender 5 und Empfänger 6 in einer Ebene liegend, vorzugsweise in dem Strahlungsleiter integriert angeordnet sind.

## Beschreibung

Die Erfindung betrifft eine optoelektronische Sensoreinrichtung gemäß dem Oberbegriff des Patentanspruches 1. Sie ist anwendbar zur mittelbaren Erfassung der Verschmutzung einer Oberfläche, insbesondere einer transparenten Scheibe.

Ein derartige Anordnung ist aus. 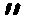 Advanced Microsystems for Automotive Applications 99", von Detlef E. Ricken und Wolfgang Gessner, Springer-Verlag 1999, S.154-155 bekannt.

Unter Verschmutzung sollen im weitesten Sinne jegliche durch Umwelteinflüsse auftreffende Fremdkörper, wie Regen, Schnee, Feuchtigkeit und Staub verstanden werden.

Zur Erfassung von Regen und Feuchtigkeit z.B. auf einer Windschutzscheibe sind eine Vielzahl von optoelektronischen Sensoren bekannt.
Derartige Sensoren basieren grundsätzlich auf der Totalreflexion von Licht an der äußeren Oberfläche der Windschutzscheibe.

Beispielsweise ist in der US 4,676,638 ein Sensor beschrieben, der das Licht (Prüflicht) einer Lichtquelle über einen an der inneren Oberfläche einer Windschutzscheibe angebrachten Strahlungsleiter (Prisma) auf einen Empfänger lenkt. Die optisch wirksamen Flächen des Strahlungsleiters sind dabei so zueinander angeordnet, daß das Prüflicht grundsätzlich an der äußeren Oberfläche total reflektiert wird und in den Strahlungsleiter von außen einfallendes Fremdlicht nicht auf den Empfänger auftrifft. Sobald jedoch das an die äußere Oberfläche der Windschutzscheibe angrenzende Medium nicht mehr nur Luft ist, z.B. wenn Regentropfen auftreffen, wird das Prüflicht nicht mehr vollständig total reflektiert, so daß der Empfänger eine reduzierte Prüflichtmenge detektiert. Da der Prüfbereich, d.h. der mit dem Prüflicht beaufschlagte Bereich der Windschutzscheibe relativ klein ist, kann schon ein einzelner Regentropfen die auf den Empfänger auftreffende Prüflichtmenge erheblich beeinträchtigen.

Eine prinzipielle Verdopplung des Prüfbereiches wird mit einem gemäß DE 41 02 146 aufgebauten Sensor möglich, durch den speziellen Aufbau des Strahlungsleiters, zweigeteilt, mit einer fokussierenden Reflexionsfläche als Teil eines Rotationsellipsoiden und der Anordnung der Lichtquelle und des Empfängers in dessen Brennpunkten.

Durch eine wiederum andere Ausbildung und Anordnung des Strahlungsleiters ermöglicht die in der DE 196 08 648 offenbarte Vorrichtung u.a. eine Mehrfachreflexion des Prüflichtes an der äußeren Oberfläche der Windschutzscheibe. Durch die Einbeziehung eines größeren Bereiches der Windschutzscheibe als Prüfbereich wird die Inhomogenität der Verteilung der Regentropfen auf der Windschutzscheibe gemittelt.

In anderen Sensoren, wie in DE 197 13 910, ist der Strahlungsleiter so konzipiert, daß eine möglichst kompakte Bauweise des Sensors möglich wird.

Auch wenn einige dieser Sensoren als Schmutzsensoren bezeichnet werden, sind sie auf Grund Ihres optischen Funktionsprinzipes nicht geeignet, jeglichen Schmutz zu detektieren. Während Flüssigkeiten wie Regentropfen beim Auftreffen auf die Windschutzscheibe relativ großflächig an der Oberfläche anhaften, entsteht beim Auftreffen von festen Stoffen, wie Staubkörnchen nur ein nahezu punktförmiger Kontakt. Daher haben nur flüssige Verunreinigungen einen spürbaren Einfluß auf die Totalreflexion. Für die genannten Sensoren ist das jedoch ohne Belang, da sie in der Regel zur Ansteuerung der Scheibenwischer vorgesehen sind.

Um jedoch aus den Meßergebnissen auf die Transparenz einer verschmutzten Oberfläche zu schließen, sind derartige Sensoren aus den genannten Gründen nicht geeignet.

Die jeweils aktuelle Transparenz zu erfassen kann z.B. interessant sein für eine Umwelteinflüssen ausgesetzte Scheibe, die im Strahlengang eines optoelektronischen Meßgerätes angeordnet ist, bei welchem die empfangene Lichtintensität als Meßgröße dient. Als Beispiel sollen hier genannt werden, ein Sichtweitenmeßgerät für Fahrzeuge oder ein Sonnenintensitätsmeßgerät, welche z.B. hinter der Windschutzscheibe oder einer anderen transparenten Scheibe in der Karosserie angebracht sein können. Eine verminderte Transparenz zu erfassen kann auch für die Gewährleistung der Sichtbarkeit z.B. von leuchteten Fahrzeugleuchten aus einer bestimmten Entfernung von Interesse sein, um z.B. deren Lichtleistung entsprechend nachzuregeln.

Mit der US 5,313,072 ist eine Prinziplösung für einen Sensor beschrieben, bei dem der Prüfbereich im Strahlengang des Prüflichtes entweder an einer Reflexionsfläche oder Transmissionsfläche entsteht. Das Wesentliche dieser Lösung besteht hier in der Erfassung des Streulichtes im Gegensatz zu allen vorher diskutierten Lösungen. Durch eine Punktlichtquelle wird eine Windschutzscheibe beleuchtet und über ein optisch abbildendes Element auf eine Reihe von Einzelempfängern mit unterschiedlichem Abstand zur optischen Achse abgebildet. Man geht davon aus, daß mit zunehmender Verschmutzung der Windschutzscheibe mehr Licht gestreut und somit zunehmend von außeraxial angeordneten Einzelempfängern detektiert wird, so daß in Abhängigkeit von Ort und Menge des detektierten Prüflichtes auf die Verschmutzung geschlossen werden kann.
Eine gerätetechnische Umsetzung dieser Prinziplösung, insbesondere wenn sich der Prüfbereich auf einer Transmissionsfläche befinden soll, scheint auf Grund der Notwendigkeit der Anordnung der Lichtquelle außerhalb des Fahrzeuges vor der Windschutzscheibe kaum praktikabel.

In 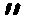 Advanced Microsystems for Automotive Applications 99", von Detlef E. Ricken und Wolfgang Gessner, Springer-Verlag 1999, S.154-155 ist ein praktikabler Oberflächenschmutzsensor, basierend auf dem Prinzip der Transmissionsmessung, aufgezeigt. Gleich den eingangs beschriebenen Sensoren weist auch dieser Sensor eine Lichtquelle, einen Strahlungsleiter und einen Empfänger auf. Im Unterschied zu den Strahlungsleitern der Sensoren der eingangs beschriebenen Art sind jedoch die optisch wirksamen Flächen hier so zueinander angeordnet, daß das einerseits eintretende und andererseits wieder austretende Strahlenbündel auf seinem Weg durch den Strahlungsleiter diesen zwischenzeitlich verläßt. Das zwischenzeitliche Verlassen des Strahlungsbündels erfolgt über eine sogenannte Testfläche, die der die Transmission beeinflussenden Verschmutzung ausgesetzt ist. Praktisch weist die Testfläche die Form einer V-Nut auf. Das senkrecht in den Strahlungsleiter durch die Eintrittsfläche eintretende kollimierte Prüflicht wird beim zwischenzeitlichen Verlassen durch die eine Seite der Testfläche zur anderen Seite der Testfläche so hingebrochen, daß es beim Wiedereintritt durch die zweite Seite der Testfläche senkrecht zur Austrittsfläche des Strahlungsleiters gebrochen wird.
Wie erläutert, findet sich der Prüfbereich auf einer Testfläche, die am Strahlungsleiter ausgebildet ist und nicht an der Oberfläche, deren Transmissionsminderung zu erfassen ist. Um die Transmissionsminderung einer Oberfläche mittelbar erfassen zu können, wird der Sensor so in diese Oberfläche integriert oder auf dieser aufgebracht, daß er den gleichen Umwelteinflüssen ausgesetzt ist wie die betroffene Oberfläche.
Vorteilhafterweise gibt es daher keine Einschränkung bezüglich der Oberflächenform und -Gestaltung, deren Verschmutzung zu erfassen ist.

Durch die mittelbare Erfassung ist es auch nicht zwingend notwendig, daß die Scheibe transparent ist. Die Verwendung eines solchen Sensors ist daher grundsätzlich denkbar nicht nur zur Erfassung der Transmissionsminderung transparenter Scheiben, sondern auch zur Erfassung der Verschmutzung beliebiger Oberflächen, sofern sie eine Integration eines Sensors gestatten. Dies eröffnet Anwendungsmöglichkeiten, die weit über die genannten hinausgehen.
Zusätzlich zur Transmissionsmessung wird mit dem vorgestellten Sensor auch die Streuung an der Testfläche erfaßt. Dazu sind in das Gehäuse des Sensors eine zweite Lichtquelle und ein zweiter Empfänger integriert. Ein Microkontroler vergleicht die Empfängersignale, erzeugt durch die unterschiedlichen optischen Wege und kann damit auf Art und Menge der Verschmutzung der Testfläche schließen.
Praktische Erprobungen haben gezeigt, daß die Größe des Prüfbereiches, der mit dem zweimaligen Durchstrahlen der Testfläche erfaßt wird, dennoch zu gering ist, um Meßergebnisse zu erhalten, die von der Inhomogenität der Verteilung, Art und Partikelgröße des Schmutzes auf der Testfläche unabhängig sind. Zum Beispiel hat die lokale Linsenwirkung eines Wassertropfens auf einer nur unwesentlich größeren Prüffläche eine unangemessen starke Auswirkung auf die Amplitude des Meßsignals. Dieser Effekt wird geringer, je größer der Prüfbereich im Verhältnis zur Partikelgröße des Schmutzes wird. Es wäre naheliegend die Größe des Prüfbereiches zu vervielfachen, indem entsprechend viele, parallel zueinander geführte Prüfstrahlenbündel durch einen ausgedehnteren Strahlungsleiter geleitet werden. Praktisch jedoch würde insbesondere auf Grund der Vielzahl von notwendigen Kollimatorlinsen eine besonders justageaufwendige und im Verhältnis zum nutzbaren Prüfbereich große Einrichtung entstehen. Auch ist bei dieser Lösung keine Referenzmessung vorgesehen, um Strahlungsleistungsschwankungen der Sender (z.B. LEDs) in Abhängigkeit von der Betriebstemperatur und vom Alter zu erfassen. Die notwendigerweise getrennte räumliche Anordnung des Senders und des Empfängers gestattet keine gemeinsame Unterbringung auf einer Leiterplatte und erfordert einen hohen Verkabelungsaufwand.

Der Erfindung liegt die Aufgabe zugrunde, eine optoelektronische Sensoreinrichtung mit einem großen Prüfbereich im Verhältnis zur Größe der Sensoreinrichtung anzugeben.
Darüber hinaus soll die Sensoreinrichtung langzeitstabil und unabhängig von thermischen Schwankungen arbeiten, sowie möglichst klein und kompakt in Massenproduktion herstellbar sein.

Diese Aufgabe wird durch die im Hauptanspruch angegebenen Merkmale gelöst. Die erfindungsgemäße Sensoreinrichtung hat den Vorteil, daß die Testfläche fast vollständig als Prüfbereich genutzt werden kann und die Sensoreinrichtung im Querschnitt nur annähernd der Größe der Testfläche entspricht, so daß die Oberfläche, deren Verschmutzung erfaßt werden soll, durch die Integration bzw. das Aufbringen der Sensoreinrichtung nur unwesentlich beeinflußt wird. Darüber hinaus ist es durch die aufgezeigte Beschaltung und Gestaltung der Sender-Empfänger-Anordnung möglich, ohne zusätzliche optoelektronische Mittel eine Referenzlichtmessung zu ermöglichen.

Die Erfindung soll nachfolgend anhand von prinzipiellen Erläuterungen und Ausführungsbeispielen unter Zuhilfenahme von Zeichnungen näher erläutert werden.

In den Zeichnungen zeigen:
- Fig.1: vereinfachtes Optikschema im Meridionalschnitt durch einen Strahlungsleiters einer Sensoreinrichtung
- Fig. 2: schematische Darstellung der Strahlführung in Draufsicht auf den Strahlungsleiter
- Fig. 3: perspektivische Darstellung einer Sender-Empfänger-Anordnung
- Fig. 4: Schaltbild für eine Anordnung gemäß Fig. 4
- Fig. 5: erstes Ausführungsbeispiel für eine Sensoreinrichtung
- Fig. 6: zweites Ausführungsbeispiel für eine Sensoreinrichtung
- Fig. 7: drittes Ausführungsbeispiel für eine Sensoreinrichtung

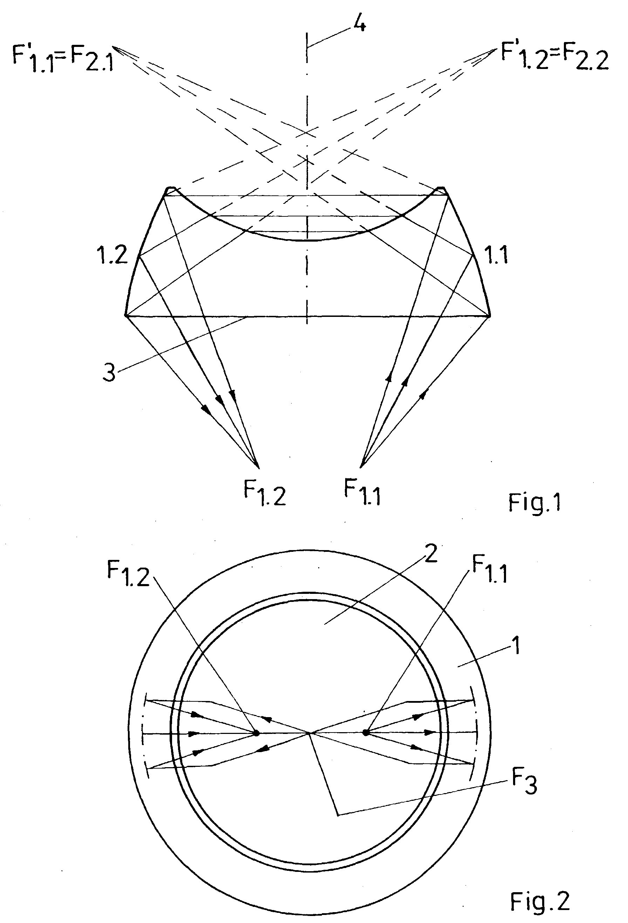

Eine erfindungsgemäße optoelektronische Sensoreinrichtung umfaßt im Wesentlichen wenigstens zwei Sender, wenigstens zwei Empfänger, einen Strahlungsleiter, sowie eine Ansteuer- und Auswerteelektronik. Erfindungswesentlich ist die Gestaltung des Strahlungsleiters. Der optische Strahlungsverlauf durch den Strahlungsleiter, soll anhand von Fig. 1 und Fig. 2 nachfolgend vereinfacht erläutert werden.

In Fig. 1 ist ein Meridionalschnitt durch ein Optikschema des Strahlungsleiters dargestellt.
Der Strahlungsleiter ist ein monolithischer, zu einer Symmetrieachse 4 rotationssymmetrischer Block, begrenzt durch eine Mantelfläche 1, eine Testfläche 2 und eine Planfläche 3. Bei allen drei Flächen handelt es sich um optisch wirksame Flächen, wobei der Geometrie der Mantelfläche 1 und der Testfläche 2, sowie deren Anordnung zueinander und zur Planfläche 3 eine für die Strahlführung wesentliche Bedeutung zukommt.
Die Mantelfläche 1 wird in jeder durch die Symmetrieachse 4 verlaufende Ebene (Meridionalschnittebene) durch zwei Linien gebildet, die zur vereinfachten Erklärung der Grundidee der Erfindung als elliptische Mantellinien verstanden werden sollen. Diese werden jeweils durch eine zur Symmetrieachse 4 in der Meridionalschnittebene geneigten Ellipse beschrieben. Gleich einer Ellipse weist jede einzelne Mantellinie zwei Brennpunkte auf, die nachfolgend als innere und äußere Brennpunkte unterschieden werden sollen. Die inneren Brennpunkte aller die Mantelfläche 1 bildenden Mantellinien bilden einen ersten Ring in einer senkrechten Brennebene (innere Brennebene) zur Symmetrieachse 4, die sich außerhalb des Strahlungsleiters seitens der Planfläche 3 befindet.
Die äußeren Brennpunkte bilden einen zweiten Ring ebenfalls in einer senkrechten Brennebene (äußere Brennebene) zur Symmetrieachse 4 außerhalb des Strahlungsleiters, seitens der Testfläche 2.
Die Testfläche 2 ist geeigneterweise eine Kugelfläche, die so dimensioniert, und zur Mantelfläche 1 angeordnet ist, daß alle aus einem inneren Brennpunkt kommenden, in einer Meridionalschnittebene liegenden Strahlen über eine erste Reflexion an der Mantelfläche 1 und eine erste Brechung an der Testfläche 2 parallelisiert werden, und nach einer zweiten Brechung an der Testfläche 2 und Reflexion an der Mantelfläche 1 in einen anderen inneren Brennpunkt abgebildet werden.

Der Strahlungsverlauf ist in Fig.1 in einer Meridionalschnittebene anhand des Hauptstrahls und der Randstrahlen dargestellt. In den in der Meridionalschnittebene liegenden beiden inneren Brennpunkten (F_{1.1}, F_{1.2}) sind ein erster Sender und ein erster Empfänger (nicht dargestellt) angeordnet. Aus dem ersten inneren Brennpunkt F_{1.1} (erster Sender) kommend, werden die Strahlen an einer ersten Mantellinie 1.1 der Mantelfläche 1 fokussierend reflektiert und virtuell in einen ersten äußeren Brennpunkt F'_{1.1} abgebildet, der bezogen auf die Strahllage zur Testfläche 2 mit einem ersten Testflächenbrennpunkt F_{2.1} zusammenfällt, so daß die Strahlen nach der Brechung an der Testfläche 2 real parallel weiterverlaufen.

Aufgrund der Rotationssymmetrie des Strahlungsleiters werden die in dieser Ebene parallelisierten Strahlen nach erneuter Brechung an der Testfläche 2 und Reflexion an einer zweiten Mantellinie 1.2 der Mantelfläche 1 in den zweiten inneren Brennpunkt F_{1.2} (erster Empfänger) reflektiert. Die Brechung der Strahlen an der Planfläche 3 wird sowohl bei der zeichnerischen Darstellung als auch bei der Erläuterung des Strahlenverlaufes außer Betracht gelassen.
Analog der in Fig. 1 dargestellten Meridionalschnittebene können theoretisch in beliebig vielen Meridionalschnittebenen, mindestens jedoch in einer weiteren, Sender und Empfänger angeordnet sein, so daß ein ringförmiges Gebilde von Sendern und Empfängern in der inneren Brennebene entsteht, auf welches an späterer Stelle genauer eingegangen werden soll.

In Fig. 2 ist in Draufsicht der Verlauf des Hauptstrahles und zweier Randstrahlen, die in einer zum Meridionalschnitt senkrechten Ebene verlaufen, dargestellt.
Wie dargestellt, werden die in dieser Ebene verlaufenden Strahlen in einen auf der Symmetrieachse 4 liegenden einem Brennpunkt F3 abgebildet.
Um für alle Strahllagen eine Abbildung aus einem inneren Brennpunkt in einen auf der Symmetrieachse liegenden Brennpunkt zu erreichen, werden die optisch wirksamen Flächen des Strahlungsleiters und ihre Lage zueinander so gerechnet und angepaßt, bis diese Forderung erfüllt ist. Aus dieser Optikrechnung ergibt sich ebenfalls, ob die Mantelfläche zwingend oder nur vorteilhafterweise versiegelt sein soll. In Fig. 1 ist eine Totalreflexion für alle Strahlneigungen gegeben, so daß eine zusätzliche Verspieglung nicht erforderlich ist.
Stellt man sich nun räumlich das gesamte Strahlenbündel vor, erkennt man, daß die von einem inneren Brennpunkt ausgehende Strahlung über eine Fokussierung in einer Brennlinie auf der Symmetrieachse 4 in einen zweiten inneren Brennpunkt abgebildet wird. Der Strahlenverlaufes ist demnach symmetrisch zur Symmetrieachse 4.

Wie bereits erwähnt, kann der Strahlungsleiter von einer Vielzahl von Strahlenbündeln mit gleicher Strahlführung durchlaufen werden. Dadurch ist nicht nur eine fast vollständige Durchstrahlung der Testfläche 2 möglich, sondern auch eine Überlappung der von den einzelnen Strahlenbündeln durchstrahlten Bereiche der Testfläche 2. Pro Strahlenbündel wird durch den jeweils zugeordneten Empfänger ein Meßwert erfaßt. Je mehr Meßwerte erfaßt werden, desto besser können die Inhomogenitäten der Verschmutzung (Größe, Transparenz und Verteilung) gemittelt werden.

Unabhängig von der Anzahl der Sender und Empfänger gestattet die aufgezeigte Prinziplösung die praktische Realisierung einer kompakten Sensoreinrichtung, deren Querschnitt nicht wesentlich größer ist als der Querschnitt der Testfläche.

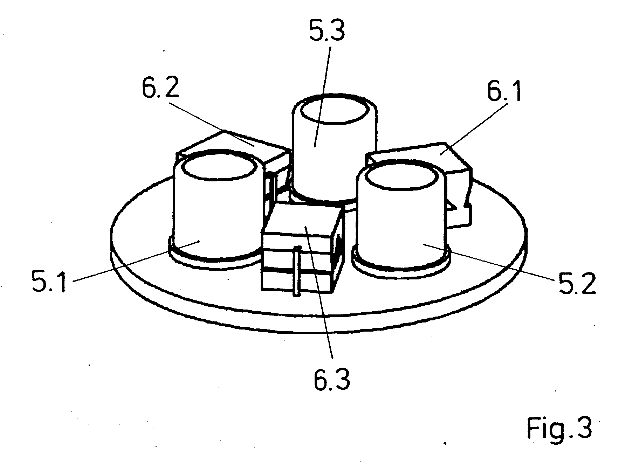

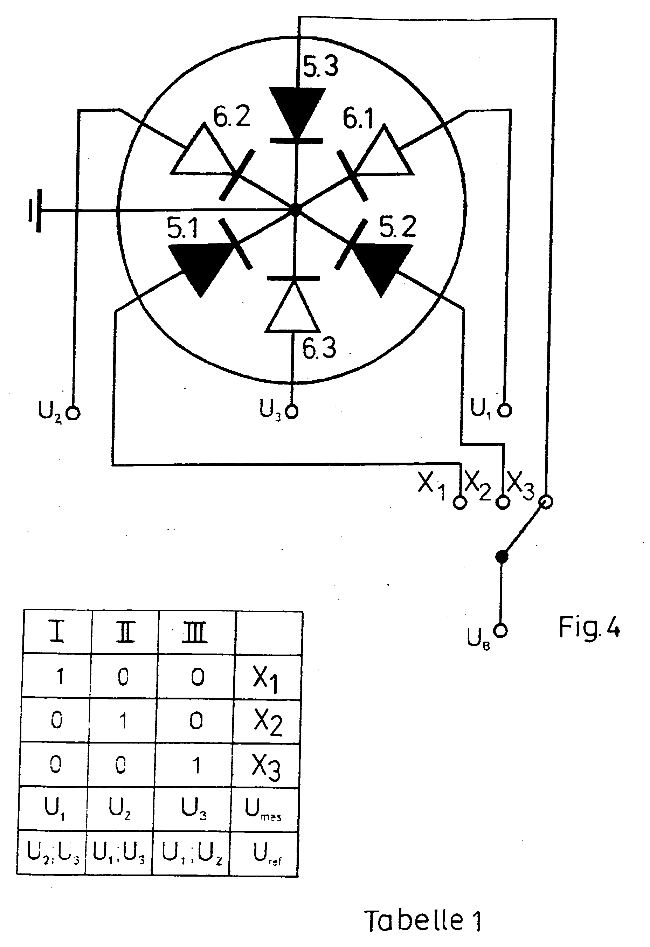

Wie bereits erwähnt, gestattet die Gestaltung des Strahlungsleiters die kreisförmige Anordnung von mehreren Sendern und Empfängern in einer Ebene.
Vorteilhafterweise sind die Sender und Empfänger wechselweise angeordnet (was eine ungerade Anzahl von Sendern und Empfängern voraussetzt) und sind einzeln ansteuer- bzw. auslesbar.
Ein vorteilhaftes Betreiben einer solchen Sender-Empfänger-Anordnung soll anhand der Fig. 3 und 4, sowie Tabelle 1 erläutert werden.
Die in Fig. 3 gezeigte Sender-Empfänger-Anordnung ist eine mit diskreten Bauelementen bestückten Leiterplatte und für eine Sensoreinrichtung vorgesehen, in welcher die Testfläche mit drei Meßstrahlenbündeln ausgeleuchtet werden soll. Entsprechend besteht die Sender-Empfänger-Anordnung aus drei Sendern und drei Empfängern, die auf einem Kreisring abwechselnd sind.
Für große Stückzahlen kann die Sender-Empfänger-Anordnung als ein integriert optoelektronisches Bauteil ausgeführt sein, das Sende- und Empfangselemente in beliebig kleiner Struktur enthält.
Anhand Fig. 4 und Tabelle 1 läßt sich das Betreiben der Sender-Empfänger-Anordnung erkennen. Ein Meßzyklus umfaßt drei Meßphasen (I, II, III), in denen jeweils einer der Schalter X geschlossen ist, so daß an einem der Sender 5 die Betriebsspannung U_{B} anliegt und der betreffende Sender 5.1, 5.2, oder 5.3 Prüflicht aussendet, welches auf den jeweils zugeordneten Empfänger 6 trifft und ein Meßsignal U_{meß} bewirkt.
Eine derartige Anordnung und Beschaltung bietet den Vorteil einer unkomplizierten zeitgleichen Referenzwertmessung, indem z.B. in der ersten Meßphase I ein bestimmter Anteil des von dem Sender 5.1 ausgesandten Meßlichts auf die benachbarten Empfänger 6.2 und 6.3 reflektiert ein Referenzsignal U_{ref} bewirken. Mit den Referenzsignalen U_{ref} werden die Meßsignale U_{meß} normiert, so daß thermisch- und altersbedingte Schwankungen in der Leuchtintensität der Sender ohne Einfluß bleiben. Zur Ansteuerung der Sender und Empfänger und Auswertung der Meß- und Referenzsignale ist eine entsprechende Ansteuer- und Auswerteelektronik vorhanden.
Das nachfolgend beschriebene erste Ausführungsbeispiel ist eine besonders vorteilhafte Ausführung für die Referenzstrahlführung.

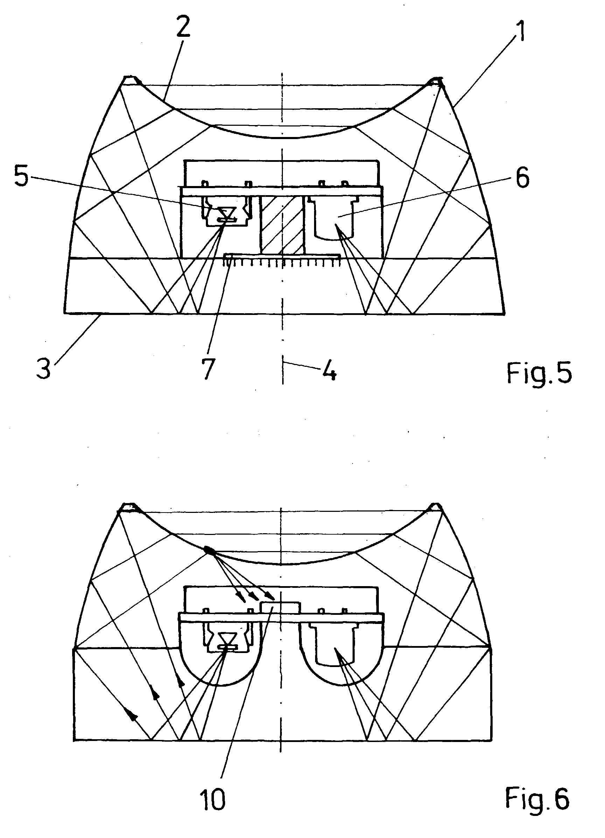

Das erste Ausführungsbeispiel für eine Sensoreinrichtung soll anhand von Fig. 5 erläutert werden. Die Sensoreinrichtung besteht aus einem Strahlungsleiter, wie er prinzipiell anhand von Fig. 1 bereits erläutert wurde und einer Sender-Empfänger-Anordnung entsprechend Fig. 4.
Um eine möglichst geringe Bauhöhe zu erreichen, wurde durch eine Verspiegelung der Planfläche 3 die Strahlführung gefaltet, so daß eine reale Brennebene für die Mantelfläche im Inneren des Strahlungsleiters erzeugt wird. Für die hier befindliche Sender-Empfänger-Anordnung bedarf es durch die Integration in das Innere des Strahlungleiters keines weiteren mechanischen oder hermetischen Schutzes. Wie anhand der dargestellten Strahlführung ersichtlich, trifft ein ohnehin für das Prüfstrahlenbündel nicht nutzbarer Prüflichtanteil auf eine verspiegelte Fläche 7 und wird auf die nicht dargestellten zum Sender 5 benachbarten Empfänger 6 reflektiert. Um die Sender-Empfänger-Anordnung einzubringen und die verspiegelte Fläche 7 zu ermöglichen, ist der Strahlungsleiter zweiteilig gestaltet, was vorzugsweise durch ein zur Planfläche paralleles Auftrennen des zumindest in der Mantelflächenkontur fertig gestellten Strahlungskörpers erfolgt.
Im Inneren der Sender-Empfänger-Anordnung ist ein Lichtschott 8 angeordnet, um eine optische Überkopplung zu vermeiden.

In einem zweiten Ausführungsbeispiel, in Fig. 6 dargestellt, ist der Strahlungsleiter gleich dem im ersten Ausführungsbeispiel aufgezeigten, eine zweiteilige Kittgruppe. Durch die Anordnung der Sender und Empfänger in einer ringnutförmigen, teilweise verspiegelten Ausnehmung ist ein zusätzliches Lichtschott, analog dem ersten Ausführungsbeispiel, nicht erforderlich. Durch eine entsprechende Berechnung der optisch wirksamen Flächen kann auf die Mitwirkung der Umfangsfläche des mit der Planfläche 3 versehenen Teils des Strahlungsleiters verzichtet werden, d.h. sie kann einfacher als Zylinderfläche hergestellt werden. Es ist auch denkbar, daß zur Optimierung des Strahlungsverlaufes die beiden Teile des Strahlungsleiters aus Materialien unterschiedlicher Brechzahl bestehen, wodurch der Strahlungsleiter kein monolithisches Gebilde im engeren Sinne ist. Mit dem zweiten Ausführungsbeispiel soll die Möglichkeit der zusätzlichen Streulichterfassung aufgezeigt werden, wodurch in Kombination mit der Transmissionsmessung zusätzliche Informationen gewonnen werden können. Wie in der Zeichnung dargestellt ist ein großflächiger Streulichtempfänger 10 mittig auf der Leiterplatte angebracht auf der sich andererseits die Sender-Empfänger-Anordnung befindet.

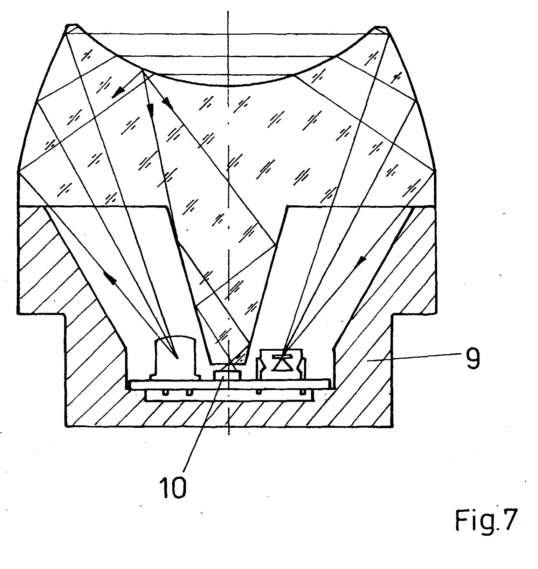

In einem dritten Ausführungsbeispiel, in Fig. 7 dargestellt, ist der Strahlungsleiter ein einteiliges Gebilde. Gegenüber dem zweiten Ausführungsbeispiel besteht der Vorteil, daß ein zusätzlicher Streulichtempfänger 10 in der gleichen Montageebene wie die Sender-Empfänger-Anordnung befestigt werden kann. Eine solche Ausführung benötigt allerdings einen zusätzlichen mechanischen und hermetischen Schutz für die Sender-Empfänger-Anordnung, der hier durch eine Fassung 9 gegeben ist.

In einem vierten Ausführungsbeispiel, nicht zeichnerisch dargestellt, soll die Sender-Empfänger-Anordnung als integriert optoelektronisches Bauteil ausgeführt und in dem als Spritzgußteil hergestellten Strahlungsleiter vollständig eingeschlossen sein.

Anhand der Ausführungsbeispiele sollte aufgezeigt werden, daß eine Ausführung einer erfindungsgemäßen Sensoreinrichtung in vielfältiger Weise möglich ist, letztendlich auch bestimmt von eventuell vorgegebenen Anschlußbedingungen für die Integration bzw. das aufbringen in bzw. auf die an sich zu prüfenden Oberfläche.

## Patentansprüche

1. Optoelektronische Sensoreinrichtung mit einer Ansteuer- und Auswerteelektronik sowie mit einem Strahlungsleiter, dessen optisch wirksame Flächen zu einer Symmetrieachse (4) rotationssymmetrisch angeordnet und so ausgebildet und zueinander angeordnet sind, dass das von wenigstens zwei Sendern (5) ausgehende und in den Strahlungsleiter eingekoppelte Prüflicht durch eine der optisch wirksamen Flächen, nämlich eine Testfläche (2) aus dieser aus ― und in diese wieder eintretend ― geführt und auf mindestens zwei Empfänger (6) abgebildet wird, wodurch ein Messsignal erzeugt wird, wobei der Strahlungsleiter eine innere Brennebene aufweist, in der die Sender (5) und Empfänger (6) jeweils paarweise achssymmetrisch gegenüberliegend angeordnet sind und die optisch wirksamen Flächen ferner so ausgebildet und zueinander angeordnet sind, dass das von einem der Sender (5) ausgesandte Prüflicht über eine Fokussierung auf der Symmetrieachse (4) auf dem jeweils achssymmetrisch gegenüber angeordneten Empfänger (6) abgebildet wird.

2. Optoelektronische Sensoreinrichtung nach Anspruch 1, dadurch gekennzeichnet,
daß die optisch wirksamen Flächen eine Planfläche (3), eine Mantelfläche (1) und die Testfläche (2) sind und den Strahlungsleiter begrenzende Flächen darstellen.

3. Optoelektronische Sensoreinrichtung nach Anspruch 1 oder 2, dadurch gekennzeichnet,
daß die Sender (5) zeitlich nacheinander ansteuerbar sind und Mittel vorhanden sind, die Anteile des ausgesandten Prüflichtes auf wenigstens einen anderen Empfänger (6), als den dem aussendenden Sender (5) gegenüber angeordneten Empfänger (6), führen, um auf diesem ein Referenzsignal zu erzeugen.

4. Optoelektronische Sensoreinrichtung nach Anspruch 3, dadurch gekennzeichnet,
daß die Anzahl der Sender (5) und Empfänger (6) eine ungeradzahlige Anzahl ist und jeweils die mittelbar benachbarten Empfänger (6) des das Meßsignal erzeugenden Empfängers (6) ein Referenzsignal erzeugen.

5. Optoelektronische Sensoreinrichtung nach Anspruch 2 oder 3, dadurch gekennzeichnet,
daß im Strahlungsleiter symmetrisch zur Symmetrieachse (4) ein zusätzlicher Streulichtempfänger (10) vorhanden ist.

6. Optoelektronische Sensoreinrichtung nach Anspruch 2, dadurch gekennzeichnet,
daß die Planfläche (3) eine reflektierende Fläche ist und die Sender (5) und Empfänger (6) im Inneren des Strahlungsleiters angeordnet sind.

7. Optoelektronische Sensoreinrichtung nach Anspruch 6, dadurch gekennzeichnet,
daß der Strahlungsleiter ein Spritzgußteil ist.
